# EUROPÄISCHE PATENTSCHRIFT

(11) **EP 1 332 822 B1**
(45) Veröffentlichungstag und Bekanntmachung des Hinweises auf die Patenterteilung: **15.08.2007**
(21) Anmeldenummer: 02000938.7
(22) Anmeldetag: 16.01.2002
(51) Int. Cl.: B23D 61/12

(54) **Bandsäge**
Bandsaw
Scie à ruban

(43) Veröffentlichungstag der Anmeldung: 06.08.2003
(73) Patentinhaber: Tyrolit Schleifmittelwerke Swarovski KG, 6130 Schwaz (AT)
(72) Erfinder: Egger, Franz, 6130 Vomp (AT)
(74) Vertreter: Hofinger, Stephan

(56) Entgegenhaltungen:
- EP-A- 0 133 124
- EP-A- 0 623 437
- EP-A- 0 657 251
- EP-A- 0 751 234
- WO-A-01/02118
- BE-A- 458 205
- DE-A- 3 724 913
- FR-A- 2 066 442
- GB-A- 728 761
- GB-A- 1 206 736

## Beschreibung

Die vorliegende Erfindung betrifft eine Bandsäge, insbesondere für Gestein, mit einem Trägerband und aufgesinterten Schleifsegmenten, wobei die Schleifsegmente auf mit dem Trägerband verschweißte Zwischenstücke aufgesintert sind, sowie ein zugehöriges Herstellungsverfahren. Eine Solche Bandsäge gemäβ dem Oberbegriff des Anspruchs 1 und ein zugehöriges Hetstellungsverfahren sind aus dem Dokument GB 728761A bekannt.

Bandsägen zeichnen sich durch eine geringe Schnittbreite sowie eine hohe Führungsgenauigkeit aus. Sie bieten weiters die Möglichkeit, sehr große Werkstücke zu zerteilen. Trotz der vielfältigen positiven Erfahrungen mit Bandsägen in der metallverarbeitenden Industrie scheiterten bisher alle Versuche, Bandsägen für die Bearbeitung von Gestein erfolgreich einzusetzen. Der Grund für diese Tatsache ist insbesondere in den hohen Kräften zu sehen, die bei der Steinbearbeitung auftreten. Diese Kräfte führten bei den bisherigen Einsatzversuchen bei Gestein regelmäßig dazu, daß sich die aufgesinterten oder auch aufgeschweißten Schleifsegmente vom Trägerband lösten, wodurch die Bandsägen rasch unbrauchbar wurden.

In der WO 01/02118 A1 wird vorgeschlagen, direkt auf dem Trägerband eine Kerbe vorzusehen, in der die Schleifsegmente angeordnet werden. Einzeln stehende Schleifzähne können hierbei erzeugt werden, indem diese einzeln und mit Abstand zueinander in die Kerbe eingesetzt werden. Alternativ schlägt die WO 01/02118 A1 vor, zunächst ein durchgehendes Schleifband in der Kerbe des Trägerbandes anzuordnen, um dann wieder Teile davon herauszuschneiden. Bei beiden Varianten wird das Schleifsegment aber immer direkt auf das Trägerband aufgebracht, was wiederum die oben genannten Probleme zur Folge hat.

Aus der GB 728,761 ist es bereits bekannt, Schleifsegmente mittels eines Zwischenstücks auf einem Träger zu befestigen, wobei die Zwischenstücke auf den Träger geschweißt sind.

Aufgabe der Erfindung ist ausgehend vom in der GB 728,761 gezeigten Stand der Technik eine Bandsäge zu schaffen, bei der eine besonders gute Verschweißbarkeit von Zwischenstücken und Trägerband sichergestellt ist.

Erfindungsgemäß ist dazu vorsehen, daß das Trägerband aus Stahl mit einem Kohlenstoffäquivalent von mehr als 0,95 % besteht und daß die Zwischenstücke aus Stahl mit einem Kohlstoffgehalt von weniger als 0,35 % oder einem Kohlenstoffäquivalent von weniger als 0,75 % bestehen.

Das Trägerband der Bandsäge muß bei geringer Dicke hohe Dehnbarkeit und hohe Zerreißfestigkeit aufweisen. Weiters muß das Trägerband ein ausgezeichnetes Biegeverschleißverhalten aufweisen, um den Beanspruchungen bei der Führung über die Rollen der Bandsägemaschine standzuhalten. Versuche haben gezeigt, daß jene Materialien, die sich aufgrund ihrer Eigenschaften als Trägerband eignen, nicht für ein stabiles und dauerhaftes Aufsintem der Schleifsegmente geeignet sind. Erst durch die Zwischenschaltung der erfindungsgemäß vorgesehenen Zwischenstücke können gleichzeitig optimale Trägerbandeigenschaften sowie ein fester Halt der aufgesinterten Schleifsegmente erreicht werden. Die getrennte Herstellung von auf Zwischenstücke aufgesinterten Schleifsegmenten mit nachfolgender Verbindung mit dem Trägerband ist zudem produktionstechnisch vorteilhaft.

Für die sichere Verbindung der Zwischenstücke mit dem Trägerband ist vorzugsweise vorgesehen, daß die Zwischenstücke durch Laserschweißung mit dem Trägerband verschweißt sind.

Für eine optimale Schleifleistung ist es günstig, wenn das Trägerband pro Laufmeter zwischen 25 und 45 Schleifsegmente, vorzugsweise etwa 35 Schleifsegmente aufweist.

Optimales Biege- und Festigkeitsverhalten wird erreicht, indem das Trägerband eine Dicke (d) zwischen 0,9 mm und 2,2 mm, vorzugsweise von etwa 1,65 mm aufweist.

Als Material für das Trägerband hat sich insbesondere 48CrMoV67 als Stahl bewährt. Die Zwischenstücke können insbesondere aus St 52 oder 25CrMo4 bestehen.
Um den Umlauf der Bandsäge an den Rollen der Bandsägemaschine nicht zu behindern, ist vorzugsweise vorgesehen, daß die Schleifsegmente eine Länge (I) zwischen 8 mm und 15 mm, vorzugsweise von etwa 10,5 mm aufweisen.

Die notwendige Härte der Schleifsegmente, die beim Einsatz im Gestein notwendig ist, wird durch den Einsatz von Diamantkorn als Schneidmittel erreicht. Als Sinterbindung hat sich dabei eine Mischung bewährt, die zumindest zwei der Elemente Eisen, Kobalt, Kupfer, Wolfram und Zinn enthält.

Die Festigkeit der Verbindung zwischen Schneidsegmenten und Zwischenstücken läßt sich dadurch erhöhen, daß die Zwischenstücke in jenem Bereich, in dem die Schleifsegmente aufgesintert sind, im Querschnitt teilweise verjüngt sind.

Das erfindungsgemäße Verfahren zur Herstellung von auf Zwischenstücken aufgesinterten Schleifsegmenten sieht vor, daß Schneidmittel enthaltendes sinterfähiges Bindemittel, auf das die Zwischenstücke bildende Material über eine Länge (L), die mindestens die zweifache Länge (I) eines Schleifsegmentes beträgt, aufgesintert wird, wonach einzelne Zwischenstücke mit aufgesinterten Schleifsegmenten aus- oder abgeschnitten werden, sodaß die Zwischenstücke einzeln mit einem Trägerband verschweißbar sind.

Dieses Verfahren ermöglicht eine effiziente Herstellung der auf Zwischenstücke aufgesinterten Schleifsegmente.

Zum Aus- oder Abschneiden der mit Schleifsegmenten versehenen Zwischenstücke wird vorzugsweise ein Schneidlaser verwendet.

Weitere Merkmale und Einzelheiten der vorliegenden Erfindung ergeben sich aus der nachfolgenden Figurenbeschreibung. Dabei zeigt:
- Fig. 1: einen Abschnitt der erfindungsgemäßen Bandsäge in Seitenansicht,
- Fig. 2: ein indirekt mit dem Trägerband der Bandsäge verbundenes Schleifsegment in vergrößerter Seitenansicht,
- Fig. 3: einen Schnitt entlang der Linie A-A in Fig. 2,
- Fig. 4: einen zu Fig. 3 analogen Schnitt durch ein zweites Ausführungsbeispiel,
- Fig. 5: einen weiteren zur Fig. 3 analogen Schnitt durch ein drittes Ausführungsbeispiel und
- Fig. 6: eine schematische Darstellung des erfindungsgemäßen Herstellverfahrens.

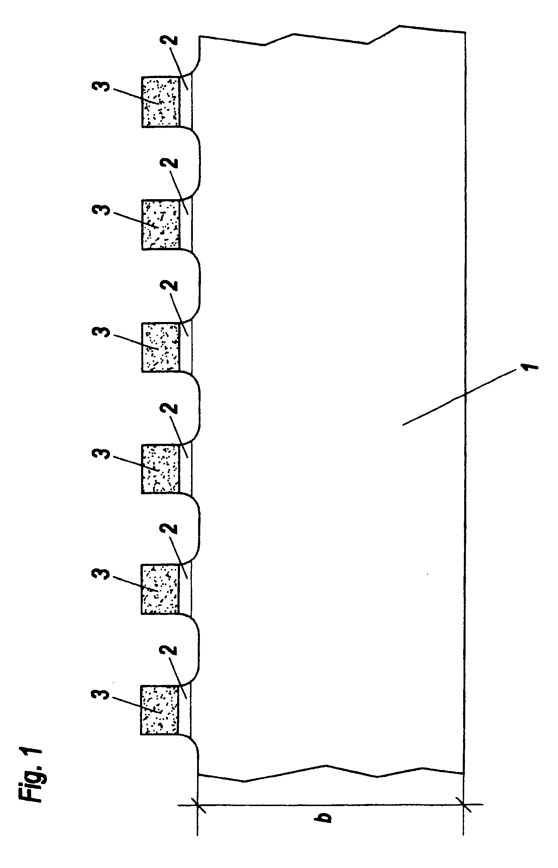

Die in den Fig. 1 bis 3 dargestellte Bandsäge weist ein Trägerband 1 auf, das aus 48CrMoV67 besteht. Das nach der Formel C_{ä} = C + (Mn/6) + (Cr/5) + (Ni/15) + (Mo/4) berechnete Kohlenstoffäquivalent liegt damit über 0,95 %. Die Breite b des Trägerbandes 1 beträgt etwa 60 mm, die Dicke d etwa 1,65 mm.

Das Trägerband 1 kann grundsätzlich beliebige Länge aufweisen, wobei diese Länge an den Abstand der Umlenkrollen der verwendeten Bandsägeeinrichtung angepaßt ist. Um auch beim Schneiden von Gestein eine hohe Schneidleistung zu erzielen, weist das Trägerband 1 etwa 35 Schneidsegmente 3 pro Laufmeter auf.

Die Schleifsegmente 3 sind nicht direkt auf das Trägerband 1 aufgebracht, sondern unter Zwischenschaltung von Zwischenstücken 2. Die Zwischenstücke 2 sind mittels eines CO₂-Lasers mit dem Trägerband 1 verschweißt.

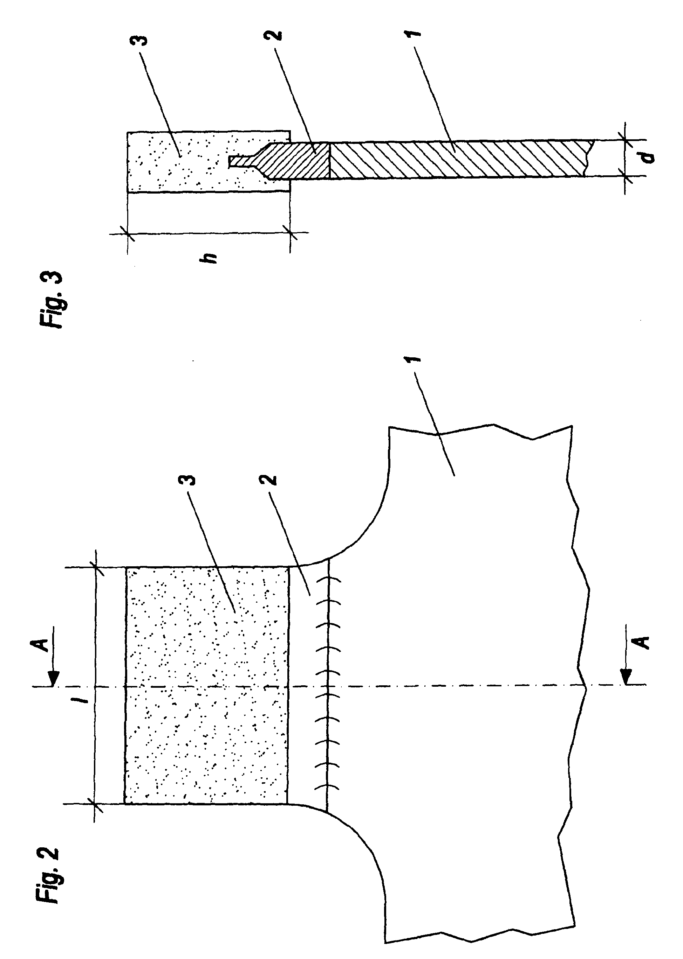

Der obere Bereich der Zwischenstücke 2 ist - wie in Fig. 3 ersichtlich - verjüngt, um einen optimalen Halt der Schleifsegmente 3 zu gewährleisten. Die Zwischenstücke 2 bestehen aus St 52 oder 25CrMo4 und können in jenem Bereich, an dem die Schleifsegmente 3 aufgesintert sind, mit einer Kupferschicht überzogen sein.

Die Schleifsegmente 3 weisen eine Länge I von etwa 10,5 mm und eine Höhe h von etwa 9 mm auf. Als Schneidmittel, das das Gestein im Schnittbereich schleifend abträgt, weisen die Schleifsegmente Diamantkorn auf, das in eine Sinterbindung eingebettet ist. Die Sinterbindung besteht aus einer Mischung aus Eisen, Kobalt, Kupfer, Wolfram und Zinn.

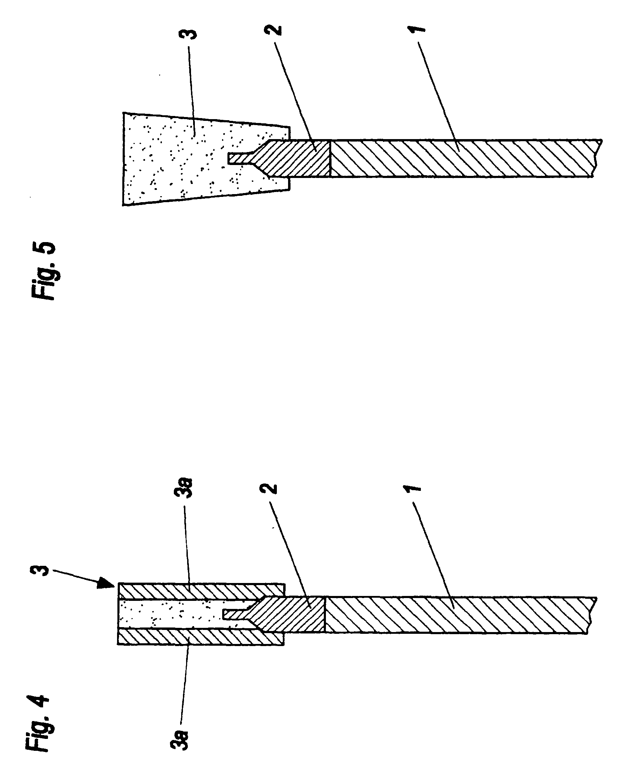

Wie das in Fig. 4 gezeigte Ausführungsbeispiel zeigt, können die Randzonen 3a der Schleifsegmente 3 eine höhere Schneidmitteldichte als der Kernbereich aufweisen. Dies verbessert die Schnitteigenschaften.

Aus Fig. 5 ist jene Variante ersichtlich, bei der die Schneidsegmente 3 nach außen konisch auseinanderlaufen, wobei die Darstellung übertrieben ist. Die Schneidsegmente 3 sind im äußeren Bereich lediglich geringfügig breiter als im inneren Bereich.

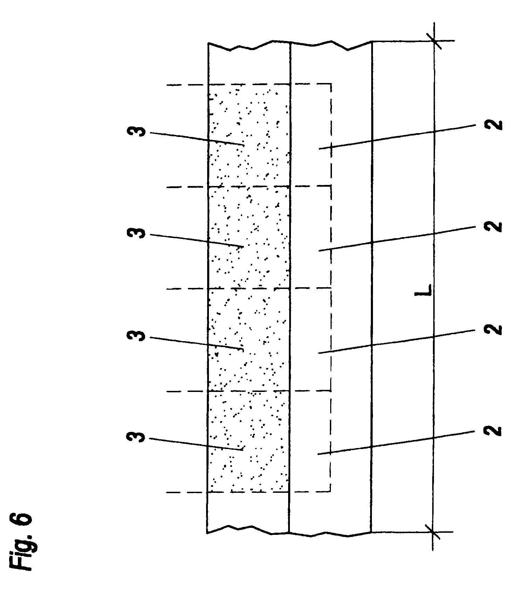

Fig. 6 zeigt schließlich in schematischer Weise das erfindungsgemäße Herstellungsverfahren. Auf ein Stück des die Zwischenstücke 2 bildenden Materials wird über eine Länge L Schneidmittel, insbesondere Diamantkorn enthaltendes sinterfähiges Bindemittel aufgebracht. Das Schneidmittel enthaltende Bindemittel wird kalt aufgepreßt und anschließend unter Druck gesintert. Mittels eines Schneidlasers können nunmehr entlang der strichliert eingezeichneten Linien einzelne Zwischenstücke 2 mit aufgesinterten Schleifsegmenten 3 aus- bzw. abgeschnitten werden. Die aus- bzw. abgeschnittenen Stücke werden anschließend einzeln mit dem Trägerband 1 verschweißt.

## Patentansprüche

1. Bandsäge, insbesondere für Gestein, mit einem Trägerband (1) und aufgesinterten Schleifsegmenten (3), wobei die Schleifsegmente (3) auf mit dem Trägerband (1) verschweißte Zwischenstücke (2) aufgesintert sind, **dadurch gekennzeichnet, daß** das Trägerband (1) aus Stahl mit einem Kohlenstoffäquivalent von mehr als 0,95 % besteht und daß die Zwischenstücke (2) aus Stahl mit einem Kohlstoffgehalt von weniger als 0,35 % oder einem Kohlenstoffäquivalent von weniger als 0,75 % bestehen.

2. Bandsäge nach Anspruch 1, **dadurch gekennzeichnet, daß** die Zwischenstücke (2) durch Laserschweißung mit dem Trägerband (1) verschweißt sind.

3. Bandsäge nach Anspruch 1 oder 2, **dadurch gekennzeichnet, daß** das Trägerband (1) pro Laufmeter zwischen 25 und 45 Schleifsegmente (3), vorzugsweise etwa 35 Schleifsegmente (3) aufweist.

4. Bandsäge nach einem der Ansprüche 1 bis 3, **dadurch gekennzeichnet, daß** das Trägerband (1) eine Dicke (d) zwischen 0,9 mm und 2,2 mm, vorzugsweise von etwa 1,65 mm aufweist.

5. Bandsäge nach einem der Ansprüche 1 bis 4, **dadurch gekennzeichnet, daß** das Trägerband (1) aus 48CrMoV67 besteht.

6. Bandsäge nach einem der Ansprüche 1 bis 5, **dadurch gekennzeichnet, daß** die Zwischenstücke (2) aus St 52 oder 25CrMo4 bestehen.

7. Bandsäge nach einem der Ansprüche 1 bis 6, **dadurch gekennzeichnet, daß** die Schleifsegmente (3) eine Länge (I) zwischen 8 mm und 15 mm, vorzugsweise von etwa 10,5 mm aufweisen.

8. Bandsäge nach einem der Ansprüche 1 bis 7, **dadurch gekennzeichnet, daß** die Schleifsegmente (3) eine Höhe (h) zwischen 7 mm und 13 mm aufweisen.

9. Bandsäge nach einem der Ansprüche 1 bis 8, **dadurch gekennzeichnet, daß** die Schleifsegmente (3) Diamantkorn als Schneidmittel enthalten.

10. Bandsäge nach einem der Ansprüche 1 bis 9, **dadurch gekennzeichnet, daß** die Sinterbindung der Schneidsegmente (3) zumindest zwei der Elemente Eisen, Kobalt, Kupfer, Wolfram und Zinn enthält.

11. Bandsäge nach einem der Ansprüche 1 bis 10, **dadurch gekennzeichnet, daß** die Schleifsegmente (3) eine Randzone (3a) mit unterschiedlicher Schneidmitteldichte, vorzugsweise höherer Schneidmitteldichte aufweisen.

12. Bandsäge nach einem der Ansprüche 1 bis 11, **dadurch gekennzeichnet, daß** die Schleifsegmente (3) im Querschnitt nach außen konisch auseinander laufen.

13. Bandsäge nach einem der Ansprüche 1 bis 12, **dadurch gekennzeichnet, daß** die Zwischenstücke (2) in jenem Bereich, in dem die Schleifsegmente (3) aufgesintert sind, im Querschnitt teilweise verjüngt sind.

14. Verfahren zum Herstellen von auf Zwischenstücken (2) aufgesinterten Schleifsegmenten (3), wobei die Zwischenstücke (2) wiederum mit einem Trägerband einer Bandsäge, insbesondere nach einem der Ansprüche 1 bis 13, verschweißbar sind, **dadurch gekennzeichnet, daß** Schneidmittel enthaltendes sinterfähiges Bindemittel, auf das die Zwischenstücke (2) bildende Material über eine Länge (L), die mindestens die zweifache Länge (I) eines Schleifsegmentes (3) beträgt, aufgesintert wird, wonach einzelne Zwischenstücke (2) mit aufgesinterten Schleifsegmenten (3) aus- oder abgeschnitten werden, sodaß die Zwischenstücke (2) einzeln mit einem Trägerband verschweißbar sind.

15. Verfahren nach Anspruch 14, **dadurch gekennzeichnet, daß** zum Aus- oder Abschneiden der mit Schleifsegmenten (3) versehenen Zwischenstücke (2) ein Schneidlaser verwendet wird.

16. Verfahren nach Anspruch 14 oder 15, **dadurch gekennzeichnet, daß** das Schneidmittel enthaltende sinterfähige Bindemittel zuerst auf das die Zwischenstücke (2) bildende Material kalt aufgepreßt und anschließend unter Druck gesintert wird.

## Claims

1. A band saw, in particular for rocks, comprising a carrier band (1) and abrasive segments (3) sintered thereonto, wherein the abrasive segments (3) are sintered on to intermediate portions (2) welded to the carrier band (1), **characterised in that** the carrier band (1) comprises steel with a carbon equivalent of more than 0.95% and that the intermediate portions (2) comprise steel with a carbon content of less than 0.35% or a carbon equivalent of less than 0.75%.

2. A band saw according to claim 1 **characterised in that** the intermediate portions (2) are welded to the carrier band (1) by laser welding.

3. A band saw according to claim 1 or claim 2 **characterised in that** the carrier band (1) has between 25 and 45 abrasive segments (3), preferably about 35 abrasive segments (3), per running meter.

4. A band saw according to one of claims 1 to 3 **characterised in that** the carrier band (1) is of a thickness (d) of between 0.9 mm and 2.2 mm, preferably of about 1.65 mm.

5. A band saw according to one of claims 1 to 4 **characterised in that** the carrier band (1) comprises 48CrMoV67.

6. A band saw according to one of claims 1 to 5 **characterised in that** the intermediate portions (2) comprise St 52 or 25CrMo4.

7. A band saw according to one of claims 1 to 6 **characterised in that** the abrasive segments (3) are of a length (I) of between 8 and 15 mm, preferably of about 10.5 mm.

8. A band saw according to one of claims 1 to 7 **characterised in that** the abrasive segments (3) are of a height (h) of between 7 mm and 13 mm.

9. A band saw according to one of claims 1 to 8 **characterised in that** the abrasive segments (3) contain diamond grain as a cutting means.

10. A band saw according to one of claims 1 to 9 **characterised in that** the sinter bond of the cutting segments (3) contains at least two of the element iron, cobalt, copper, tungsten and tin.

11. A band saw according to one of claims 1 to 10 **characterised in that** the abrasive segments (3) have and edge zone (3a) with differing cutting means density, preferably a higher cutting means density.

12. A band saw according to one of claims 1 to 11 **characterised in that** the abrasive segments (3) diverge conically outwardly in cross-section.

13. A band saw according to one of claims 1 to 12 **characterised in that** the intermediate portions (2) are partially reduced in cross-section **in that** region in which the abrasive segments (3) are sintered thereonto.

14. A process for producing abrasive segments (3) which are sintered on to intermediate portions (2), wherein the intermediate portions (2) are again weldable to a carrier band of a band saw, in particular according to one of claims 1 to 13, **characterized in that** the cutting means-containing sinterable bonding agent is sintered onto the material forming the intermediate portions (2) over a length (L) which is at least double the length (I) of an abrasive segment (3), whereupon individual intermediate portions (2) with abrasive segments (3) sintered thereon are cut out or off so that the intermediate portions (2) are weldable together with the carrier band individually.

15. A process according to claim 14 **characterised in that** a cutting laser is used for cutting out or off the intermediate portions (2) provided with abrasive segments (3).

16. A process according to claim 14 or claim 15 **characterised in that** the cutting means-containing sinterable bonding agent is first cold-pressed on to the material forming the intermediate portions (2) and then sintered under pressure

## Revendications

1. Scie à ruban, en particulier pour de la roche, comprenant un ruban support (1) et des segments de meulage frittés (3), où les segments de meulage (3) sont frittés sur des pièces intercalaires (2) soudées au ruban support (1), **caractérisée en ce que** le ruban support (1) est en acier ayant un équivalent carbone de plus de 0,95 %, et **en ce que** les pièces intercalaires (2) sont en acier ayant une teneur en carbone de moins de 0,35 % ou un équivalent carbone de moins de 0,75 %.

2. Scie à ruban selon la revendication 1, **caractérisée en ce que** les pièces intercalaires (2) sont soudées au ruban support (1), par soudage au laser.

3. Scie à ruban selon la revendication 1 ou 2, **caractérisée en ce que** le ruban support (1) présente, par mètre courant, entre 25 et 45 segments de meulage (3), de préférence à peu près 35 segments de meulage (3).

4. Scie à ruban selon l'une quelconque des revendications 1 à 3, **caractérisée en ce que** le ruban support (1) présente une épaisseur (d) comprise entre 0,9 mm et 2,2 mm, de préférence à peu près égale à 1,65 mm.

5. Scie à ruban selon l'une quelconque des revendications 1 à 4, **caractérisée en ce que** le ruban support (1) est constitué d'un alliage du type 48CrMoV67.

6. Scie à ruban selon l'une quelconque des revendications 1 à 5, **caractérisée en ce que** les pièces intercalaires (2) sont en acier (St) 52 ou constituées d'un alliage du type 25CrMo4.

7. Scie à ruban selon l'une quelconque des revendications 1 à 6, **caractérisée en ce que** les segments de meulage (3) présentent une longueur (1) comprise entre 8 mm et 15 mm, de préférence à peu près égale à 10,5 mm.

8. Scie à ruban selon l'une quelconque des revendications 1 à 7, **caractérisée en ce que** les segments de meulage (3) présentent une hauteur (h) comprise entre 7 mm et 13 mm.

9. Scie à ruban selon l'une quelconque des revendications 1 à 8, **caractérisée en ce que** les segments de meulage (3) contiennent des grains de diamant servant de moyens de coupe.

10. Scie à ruban selon l'une quelconque des revendications 1 à 9, **caractérisée en ce que** la liaison des éléments de coupe (3), par frittage, contient au moins deux des éléments tels que le fer, le cobalt, le cuivre, le tungstène et l'étain.

11. Scie à ruban selon l'une quelconque des revendications 1 à 10, **caractérisée en ce que** les segments de meulage (3) présentent une zone de bordure (3a) ayant une densité variable de moyens de coupe, de préférence une plus grande densité de moyens de coupe.

12. Scie à ruban selon l'une quelconque des revendications 1 à 11, **caractérisée en ce que** les segments de meulage (3), en section, s'écartent les uns des autres de manière conique, vers l'extérieur.

13. Scie à ruban selon l'une quelconque des revendications 1 à 12, **caractérisée en ce que** les pièces intercalaires (2), dans la zone dans laquelle les segments de meulage (3) sont frittés, sont, en section, partiellement rétrécies.

14. Procédé de fabrication de segments de meulage (3) frittés sur des pièces intercalaires (2), où les pièces intercalaires (2) peuvent être soudées à nouveau à un ruban support d'une scie à ruban, en particulier selon l'une quelconque des revendications 1 à 13, **caractérisé en ce qu'**un liant, pouvant être fritté et contenant des moyens de coupe, est fritté sur le matériau formant les pièces intercalaires (2), sur une longueur (L) qui est égale au moins au double de la longueur (1) d'un segment de meulage (3), à la suite de quoi différentes pièces intercalaires (2) à segments de meulage (3) frittés pardessus sont découpées ou coupées, de sorte que les pièces intercalaires (2) peuvent être soudées individuellement à un ruban support.

15. Procédé selon la revendication 14, **caractérisé en ce que** l'on utilise un laser de coupe pour la découpe ou la coupe des pièces intercalaires (2) dotées de segments de meulage (3).

16. Procédé selon la revendication 14 ou 15, **caractérisé en ce que** le liant pouvant être fritté et contenant des moyens de coupe est, en premier lieu, pressé à froid sur le matériau formant les pièces intercalaires (2), puis fritté sous pression.
